# EUROPÄISCHE PATENTSCHRIFT

(11) **EP 2 534 013 B1**
(45) Veröffentlichungstag und Bekanntmachung des Hinweises auf die Patenterteilung: **14.05.2014**
(21) Anmeldenummer: 11703442.1
(22) Anmeldetag: 10.02.2011
(51) Int. Cl.: B60R 21/01, H04M 11/04

(54) **VERFAHREN UND VORRICHTUNG ZUM AUSLÖSEN EINES NOTRUFS IN EINEM MIT EINEM AIRBAG AUSGERÜSTETEN FAHRZEUG**
METHOD AND DEVICE FOR INITIATE AN EMERGENCY CALL IN A VEHICLE HAVING AN AIRBAG
MÉTHODE ET DISPOSITIF POUR INITIER UN APPEL DE SECOURS DANS UN VÉHICULE ÉQUIPÉ AVEC UN AIRBAG

(30) Priorität: 11.02.2010 DE 102010007607
(43) Veröffentlichungstag der Anmeldung: 19.12.2012
(73) Patentinhaber: Continental Automotive GmbH, 30165 Hannover (DE)
(72) Erfinder: STÄHLIN, Ulrich, 65760 Eschborn (DE); RIETH, Peter E., 65343 Eltville (DE); DIEBOLD, Jürgen, 65760 Eschborn (DE); MENZEL, Marc, 35096 Weimar (Lahn) (DE); SCHIRLING, Andreas, 64285 Darmstadt (DE); FESER, Michael, 93092 Barbing (DE)
(86) Internationale Anmeldenummer: PCT/EP2011/051917
(87) Internationale Veröffentlichungsnummer: WO 2011/098498

(56) Entgegenhaltungen:
- DE-A1- 10 039 693
- DE-A1- 10 137 670
- DE-U1- 9 318 057
- US-A1- 2008 203 814
- US-A1- 2008 228 349

## Beschreibung

Die vorliegende Erfindung betrifft ein Verfahren sowie eine Vorrichtung zum Auslösen eines Notrufs in einem mit einem Airbag ausgerüsteten Fahrzeug. Durch das angegebene Verfahren sowie die angegebene Vorrichtung ist es insbesondere möglich, ein mit einem Airbag ausgerüstetes Fahrzeug mit einem Notfallsystem nachzurüsten, welches im Falle einer Auslösung eines Airbags einen Notruf (Ecall) an eine geeignete Notrufempfangsstelle sendet, um eventuell nötige Hilfsmaßnahmen einzuleiten.

US 2008/203814 A1 offenbart eine Fahrzeuginnenraum-Notfallberichtsvorrichtung. Diese ist so aufgebaut, dass die Betriebsspannungsquelle nur von einer Fahrzeugbatterie zu einer Hilfsbatterie geschaltet wird, wenn eine Pre-Crash-Sicherheits-ECU bestimmt, dass ein Fahrzeug mit etwas kollidiert. Das heißt, der Betrieb der Energiequelle von der Fahrzeugbatterie zur Hilfsbatterie schaltet nur dann, wenn die Gefahr besteht, dass das Fahrzeug mit etwas zu kollidieren droht. Dies ermöglicht es, die Betriebsspannungsquelle von der Fahrzeugbatterie zur Hilfsbatterie wirksam zu schalten und die Kapazität der Hilfsbatterie nicht nutzlos zu verbrauchen.

Moderne Fahrzeuge verfügen bereits seit vielen Jahren über Airbag-System, welche im Fall eines Unfalls, insbesondere im Fall eines Zusammenstoßes, die auf den Insassenkörper einwirkenden Beschleunigungskräfte über pyrotechnisch aufgeblasene Luftsäcke dämpfen sollen, bzw. verhindern sollen, dass Insassen im Fall des Auftretens hoher Beschleunigungskräfte mit Teilen des Fahrzeuginnenraumes zusammenstoßen.

Des Weiteren sind Dank des Fortschrittes in der Telekommunikation viele Fahrzeugnutzer heutzutage mit Mobiletelefonen ausgerüstet, oder die Fahrzeuge weisen Mobiltelefoneinrichtungen auf.

In Abhängigkeit der bei einem Unfall einwirkenden Kräfte kann es dazu kommen, dass Insassen durch Verletzungen oder andere Umstände daran gehindert sind, Hilfe herbeizuholen. In solchen Fällen hat es sich als sinnvoll erwiesen, automatisiert einen Notruf abzusetzen.

Automatisierte Notrufe, sogenannte Ecalls, sind aus dem Stand der Technik bekannt. Innerhalb der Europäischen Union bestehen auch Bestrebungen, eine Standarisierung für ein Ecall-System auszuarbeiten, um länderübergreifend ein funktionstüchtiges Notrufsystem bereitstellen zu können. In Neufahrzeugen ist eine Integration von geeigneten Notrufsystemen meist problemlos möglich, da eine entsprechende Signalausgabe zur Auslösung eines Ecalls in dem Airbag-Steuersystem von Neufahrzeugen vorgesehen werden kann. Problematischer gestaltet sich die Nachrüstung von Notrufsystem in Fahrzeugen, welche eben nicht werksseitig mit entsprechenden Systemen ausgerüstet sind. Dies liegt insbesondere darin begründet, dass es sich bei Airbag-Systemen um pyrotechnische Einrichtungen handelt, an welchen aus Sicherheitsgründen keinerlei Manipulation zulässig ist. So führt beispielsweise eine Manipulation des Airbag-System in Deutschland zum Erlöschen der allgemeinen Betriebserlaubnis des Fahrzeugs, wodurch es nicht mehr im öffentlichen Verkehrsraum bewegt werden darf.

Es ist jedoch wünschenswert, dass auch ältere Fahrzeuge mit einem Notrufsystem nachgerüstet werden können, welches im Fall eines einen Airbag auslösenden Unfalls automatisch einen Notruf absetzen könnte.

Aufgabe der Erfindung ist es daher, ein Verfahren sowie eine Vorrichtung anzugeben, welche zuverlässig das Auslösen eines Notrufs initiieren, ohne dass es einer Veränderung des Air-bag-Steuerungssystems bedarf.

Die Lösung der Aufgabe erfolgt hinsichtlich des Verfahrens erfindungsgemäß durch ein Verfahren zum Auslösen eines Notrufs über ein Telekommunikations- oder Funknetz in einem mit einem Airbag ausgerüsteten Fahrzeug, wobei der Notruf in Abhängigkeit eines durch die Zündung eines Airbags induzierten magnetischen, elektrischen und/oder elektromagnetischen Feldes eingeleitet wird, gemäß Anspruchs 1.

Zur Auslösung eines Airbags wird in einem Airbag-Steuerungssystem eine Zündspannung erzeugt und an eine Sprengkapsel eines Airbags angelegt. Hierdurch wird diese zur Explosion gebracht. Die dabei freigesetzten Explosionsgase führen zu einer Entfaltung des Airbags und zur Ausbildung des gewünschten Polsters. Airbag-Steuerungssystem und Sprengkapsel sind über eine Verbindungsleitung miteinander verbunden. Diese besteht in der Regel aus zwei nicht miteinander verdrillten Adern, wovon die eine die Zündspannung führt, während die zweite eine zum Schluss des Stromkreises notwendige Massenverbindung sicherstellt. Zur Zündung des Airbags fließt in der Regel für 1,5 ms bis 3 ms ein Zündstrom von 1 A bis 2 A. Hierbei wird der Zündstrom auf den angegebenen Wert geregelt, um die Energiereserven des Fahrzeugs zu schonen. Darüber hinaus sind die zur Auslösung verwendeten Zündpillen sehr niederohmig, so dass es keiner höheren Ströme bedarf.

Aufgrund der der Induktivität in der Verkabelung treten bei der Zündung eines Airbags Spannungen von ca. 600 V auf. Diese führen in den Leitungen zur Ausbildung eines magnetischen, elektrischen und/oder elektromagnetischen Feldes, welches sich mittels geeigneter Einrichtungen detektieren und erfindungsgemäß zur zuverlässigen Initiierung eines Notrufs nutzen lässt.

Die Detektion des induzierten Feldes bedarf keinerlei Manipulation am geschlossen Zündsystem des Airbags und hat somit keinen sicherheitsrelevanten Einfluss auf das Airbag-Steuerungssystem. Hierdurch wird ein Erlöschen der allgemeinen Betriebserlaubnis durch die Nachrüstung eines Ecall-Systems vermieden.

Erfindungsgemäß sind hierzu unterschiedliche Vorgehensweisen möglich. In einer Ausgestaltung des erfindungsgemäßen Verfahrens wird das durch den Zündstrom in den von dem Airbag-Steuerungssystem zu der Sprengkapsel führenden Leitungen induzierte magnetische Feld mittels eines Magnetfeldsensor detektiert und/oder gemessen. Geeignete Magnetfeldsensoren sind beispielsweise eine Rogowski-Spule, ein Hall-Sensor, ein Feldplattenfühler, ein Wiegand-Sensor oder ein SQUID-Sensor.

Im beispielsweisen Fall der Verwendung einer Rogowski-Spule, bei welcher es sich um einen mit einer Drahtspule umwickelten Ferritkern handelt, wird eine solche um das Zündkabel gelegt. Der Zündstrom in den Kabeln induziert ein magnetisches Feld, welches in den Spulen ein entsprechendes Signal erzeugt. Dieses Signal kann mittels geeigneter Verstärker und/oder einer Integrationselektronik aufbereitet werden. Sofern das Signal einen vorgegeben Grenzwert überschreitet, kann davon ausgegangen werden, dass ein Zündstrom zur Auslösung eines Airbags durch die Zündleitung geflossen ist, und es kann mittels einer geeigneten Steuerungselektronik ein Ecall auf einem Kommunikationssystem ausgelöst werden. Kommunikationssystem im Sinne dieser Erfindung kann ein Mobiltelefonsystem, ein Funksystem oder ein in dem Fahrzeug integriertes Telekommunikationssystem sein. Zur Anbindung des Kommunikationssystems an das Ecall-System können diese sowohl kabelgebunden oder auch drahtlos, wie beispielsweise mittels Bluetooth, ZigBee, WLAN, etc., miteinander signaltechnisch verbunden sein.

Zur Verbesserung der Detektion des induzierten Magnetfeldes kann es erfindungsgemäß vorgesehen sein, jede der beiden Leitungen des Zündkabels mit einem eigenen Sensor zu versehen. Hierdurch kann eine differenziertere Detektion des Zündimpulses erfolgen.

In einer weiteren Ausgestaltung der Erfindung wird das durch den Zündstrom in dem Zündkabel induzierte elektrische Feld detektiert und zur Grundlage der Ecall-Auslösung gemacht. Hierzu kann es vorgesehen sein, dass man die einzelnen Leitungen des Zündkabels durch eine Nut führt, welche mit einem Metall ausgekleidet ist, wobei eine Struktur entsteht, welche im Aufbau einem Koaxial-Kondensator entspricht. Das durch den durch die Leitungen fließenden Zündstrom kapazitiv auf die Nuten gekoppelte Signal kann dann wieder verstärkt und ausgewertet werden. Bei Überschreitung eines Grenzwertes kann dann wiederum die Absetzung eines entsprechenden Notrufes initiiert werden.

In einer weiteren Ausgestaltung der Erfindung wird das durch den Zündstrom induzierte elektromagnetische Feld (EM-Feld) zur Auslösegröße für die Absetzung eines Notrufes gemacht. Hierzu kann es vorgesehen sein, dass durch den Zündstrom induzierte EM-Feld mittels einer an eine entsprechende Verstärkungs- und Auswertungselektronik angeschlossenen Antenne als Fernfeld zu detektieren. Aufgrund der hohen Zündspannung bzw. des hohen Zündstroms ist ein durch die Zündung eines Airbags induziertes Feld eindeutig von anderen Feldern im Fahrzeug unterscheidbar. Insbesondere ist es bei einem solchen System vorteilhafterweise möglich, eine einzelne Antenne im Fahrzeug vorzusehen, welche alle im Fahrzeug installierten Airbags überwachen kann. Eine Zündung mehrerer Airbags, wie z. B. Fahrer- und Beifahrerairbag, führt dabei durch die mehreren EM-Felder zu einer verbesserten Detektion der Auslösung. Auch die Zündung weiterer pyrotechnischer Sicherheitseinrichtungen, wie z. B. Gurtstraffer, kann bei dieser Art der Detektion Berücksichtigung finden.

In einer weiteren vorteilhaften Ausgestaltung der Erfindung erfolgt die Auslösung des Notrufs erst mit etwas Latenz. Hierdurch ist es möglich, festzustellen, ob die detektierten Impulse auch tatsächlich auf die Zündung von Airbags zurückzuführen sind. Des Weiteren kann es erfindungsgemäß vorgesehen sein, unterschiedliche Sensoren und Detektionsmöglichkeiten der zuvor beschriebenen Art miteinander zu einem System zu kombinieren, um die Detektionsgenauigkeit des Verfahrens zu erhöhen. Auch kann es in dem erfindungsgemäßen Verfahren vorgesehen sein, weitere Sensorinformationen wie z.B. Daten eines Beschleunigungssensors oder eines akustischen Sensors bei der Entscheidung über die Initiierung eines Notrufs zu berücksichtigen. Auch liegt es im Rahmen der Erfindung, Informationen bzw. Signale, welche über einen rückwirkungsfreien CAN-Abgriff der Fahrzeugelektronik geliefert werden können, in dem Verfahren zur Initiierung eines Notrufs zu berücksichtigen.

Hinsichtlich der Vorrichtung wird die Aufgabe der Erfindung durch eine Vorrichtung zur Auslösung eines Notruf in einem mit einem Airbag ausgerüsteten Fahrzeugs, aufweisend eine Einrichtung zum Absetzen eines Notrufs, eine Einrichtung zur Messung eines durch die Zündung eines Airbags induzierten magnetischen, elektrischen und/oder elektromagnetischen Feldes sowie eine Steuereinrichtung, wobei die Steuereinrichtung mit der Einrichtung zum Absetzen des Notrufs und der Einrichtung zur Messung des magnetischen, elektrischen und/oder elektromagnetischen Feldes steuerungstechnisch so verbunden ist, dass bei der Messung einer einen hinterlegten Grenzwert überschreitenden Feldstärke ein Auslöseimpuls zur Auslösung eines Notrufs von der Steuerungseinrichtung an die Notrufeinrichtung sendbar ist, gelöst.

Die Vorrichtung kann dabei zur Detektion des magnetischen, elektrischen und/oder elektromagnetischen Feldes wenigstens einen Sensor aus der Gruppe bestehend aus Rogowski-Spule, Hall-Sensor, Feldplattenfühler, Wiegand-Sensor, SQUID-Sensor, Koaxialkondensator und elektromagnetischer Fernfeldsensor aufweisen. Diese Art der Sensoren erlaubt eine sichere und störungsunempfindliche Detektion der durch die Zündung eines Airbags induzierten Felder.

Des Weiteren kann es vorgesehen sein, dass der Feldstärke-Grenzwert, ab dessen Überschreitung die Absetzung eines Notrufs durch die Vorrichtung initiiert wird, einstellbar ist. Hierdurch ist die Vorrichtung vorteilhafterweise an unterschiedliche Fahrzeugtypen und/oder Airbag-Typen anpassbar.

Die Vorrichtung kann kabelgebunden oder aber auch drahtlos mit einem Mobiltelefon, einem Funksystem und/oder einem fest im Fahrzeug integriertem Telekommunikationssystem verbunden sein. Dies kann z. B. über geeignete Adapterkabel oder auch über eine drahtlose Kommunikationsschnittstelle, wie z. B. Bluetooth, ZigBee, WLAN, etc., erfolgen.

Das den Notruf initiierende Signal kann z. B. eine eingespeicherte Telefonnummer, eine Kurznachricht (SMS) oder ein anderes geeignetes Signal sein. In einer Ausgestaltung der Erfindung kann es auch vorgesehen sein, dass mit dem das Absetzen eines Notrufs initiierenden Signals auch Informationen über den Standort des Fahrzeugs übermittelt werden, welche z. B. über ein an das System angeschlossenen GPS-Empfänger erhalten werden.

Erfindungsgemäß kann es vorgesehen sein, dass die Vorrichtung eine Kombination aus wenigstens zwei der genannten Sensoren aufweist und/oder weitere Sensoren zur Detektion einer Airbag-Auslösung, insbesondere einen Beschleunigungssensor und/oder einen akustischen Sensor aufweist, welche mit der Steuereinrichtung verbunden sind.

Nachfolgend wird die Erfindung unter Bezugnahme auf die anliegenden Zeichnungen anhand bevorzugter Ausführungsbeispiele exemplarisch erläutert. Dabei zeigen:
- Fig. 1: eine schematische Funktionsskizze einer Vorrichtung nach der Erfindung,
- Fig. 2: eine schematische Funktionsskizze einer Ausgestaltung einer Vorrichtung nach der Erfindung.

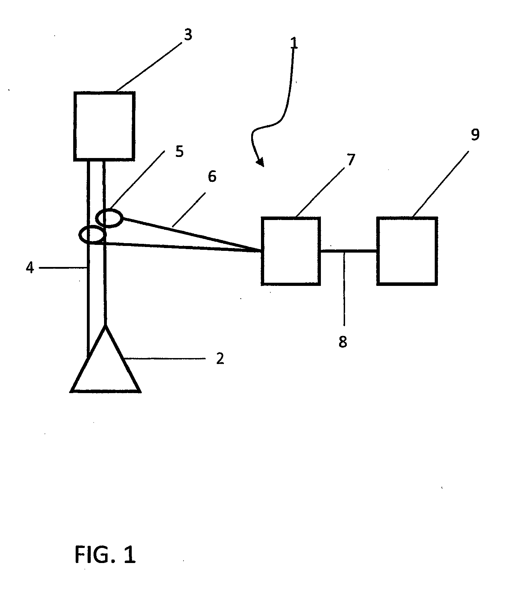

Fig. 1 zeigt eine Vorrichtung 1 zum Auslösen eines Notrufs in einem mit einem Airbag 2 ausgerüstetem Fahrzeug. Die Vorrichtung 1 weist eine Steuerungseinrichtung 7 auf, welche über Leitungen 6 mit zwei Rogowski-Spulen 5 signaltechnisch verbunden ist. Durch die Rogowski-Spulen 5 sind die einzelnen Kabel 4 der Zündleitung geführt, welche den Airbag 2 mit einem Airbag-Steuergerät 3 verbinden. Zur Zündung des Airbags 2 sendet das Airbag-Steuergerät 3 eine Zündspannung durch die Kabel 4, welchen in diesen ein magnetisches Feld induziert. Das induzierte Feld wird durch die Rogowski-Spulen 5 detektiert und ein entsprechendes Signal wird durch die Leitungen 6 an die Steuereinrichtung 7 gesendet. Überschreitet das Signal einen eingestellten Grenzwert, sendet die Steuerungseinrichtung 7 über Leitung 8 an eine Telekommunikationseinrichtung 9 ein das Absetzen eines Notrufs initiierendes Signal. Dies kann z. B. eine voreingestellte Telefonnummer, eine Kurznachricht (SMS) oder ein anderes geeignetes Signal sein.

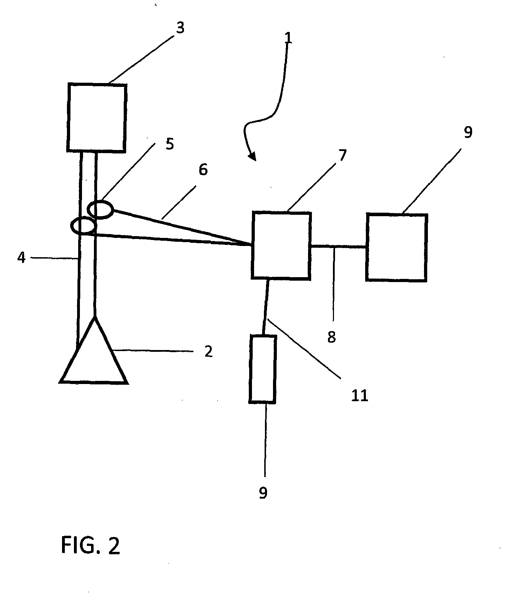

In Fig. 2 ist eine Ausgestaltung einer Vorrichtung nach der Erfindung gezeigt, welche zusätzlich zu den in FIG 1 beschriebenen Komponenten eine Antenne 11 aufweist, welche ein durch die Zündung des Airbags 2 induziertes elektromagnetisches Feld empfängt und dieses über Leitung 10 als Signal an die Steuereinrichtung 7 sendet. Diese berücksichtigt das von der Antenne 11 empfangene Signal bei der Initiierung des Notrufs.

## Patentansprüche

1. Verfahren zum Auslösen eines Notrufs in einem mit einem Airbag (2) ausgerüsteten Fahrzeug, wobei der Notruf in Abhängigkeit eines durch die Zündung eines Airbags (2) induzierten magnetischen, elektrischen und/oder elektromagnetischen Feldes eingeleitet wird, **dadurch gekennzeichnet, dass** zur Einleitung des Notrufs ein durch den in den Anschlusskabeln (4) eines Airbags bei dessen Zündung fließenden Strom induziertes magnetisches, elektrisches und/oder elektromagnetisches Feld gemessen wird, und bei Überschreitung eines Grenzwertes der gemessenen Feldstärke die Einleitung eines Notrufs ausgelöst wird.

2. Verfahren gemäß Anspruch 1, wobei das induzierte Feld mittels eines Hall-Sensors, einer Rogowski-Spule (5), eines Koaxial-Kondensators und/oder eines elektromagnetischen Fernfelddetektors gemessen wird.

3. Vorrichtung zur Auslösung eines Notrufs (1) in einem mit einem Airbag (2) ausgerüsteten Fahrzeug, aufweisend eine Einrichtung zum Absetzen eines Notrufs (9), eine Einrichtung zur Messung eines durch die Zündung eines Airbags induzierten magnetischen, elektrischen und/oder elektromagnetischen Feldes (5) sowie eine Steuereinrichtung, wobei die Steuereinrichtung mit der Einrichtung zum Absetzen des Notrufs (9) und der Einrichtung zur Messung des magnetischen, elektrischen und/oder elektromagnetischen Feldes steuerungstechnisch so verbunden ist, dass bei der Messung einer einen hinterlegten Grenzwert überschreitenden Feldstärke ein Auslöseimpuls zur Auslösung eines Notrufs von der Steuerungseinrichtung an die Einrichtung zum Absetzen eines Notrufs (9) sendbar ist.

4. Vorrichtung gemäß Anspruch 3, wobei die Einrichtung zur Messung des magnetischen, elektrischen und/oder elektromagnetischen Feldes (5) wenigstens einen Sensor aus der Gruppe bestehend aus Rogowski-Spule, Hall-Sensor, Feldplattenfühler, Wiegand-Sensor, SQUID-Sensor, Koaxialkondensator und elektromagnetischer Fernfeldsensor aufweist.

5. Vorrichtung gemäß einem der Ansprüche 3 oder 4, wobei der Feldstärke-Grenzwert einstellbar ist.

6. Vorrichtung gemäß einem der Ansprüche 3 bis 5, wobei diese eine Kombination aus wenigstens zwei der genannten Sensoren aufweist.

7. Vorrichtung gemäß einem der Ansprüche 3 bis 6, wobei diese wenigstens einen weiteren Sensor zur Detektion einer Airbag-Auslösung, insbesondere einen Beschleunigungssensor und/oder einen akustischen Sensor aufweist, welche mit der Steuereinrichtung verbunden sind.

8. Vorrichtung gemäß einem der Ansprüche 3 bis 7, wobei diese in einem Fahrzeug nachrüstbar ist.

## Claims

1. Method for triggering an emergency call in a vehicle equipped with an airbag (2), wherein the emergency call is initiated in dependence on a magnetic, electrical and/or electromagnetic field induced by the firing of an airbag (2), **characterized in that** in order to initiate the emergency call, a magnetic, electrical and/or electromagnetic field induced by the current flowing in the connection cables (4) of an airbag in the event of the firing of the latter is measured and the initiation of an emergency call is triggered if a limit value of the measured field strength is exceeded.

2. Method according to Claim 1, wherein the induced field is measured using a Hall sensor, a Rogowski coil (5), a coaxial capacitor and/or an electromagnetic far-field detector.

3. Device for triggering an emergency call (1) in a vehicle equipped with an airbag (2), having a device (9) for transmitting an emergency call, a device (5) for measuring a magnetic, electrical and/or electromagnetic field induced by the firing of an airbag, and a control device, wherein the control device is connected, for control purposes, to the device (9) for transmitting the emergency call and the device for measuring the magnetic, electrical and/or electromagnetic field in such a manner that, when a field strength exceeding a stored limit value is measured, a triggering pulse for triggering an emergency call can be sent from the control device to the device (9) for transmitting an emergency call.

4. Device according to Claim 3, wherein the device (5) for measuring the magnetic, electrical and/or electromagnetic field has at least one sensor from the group consisting of a Rogowski coil, a Hall sensor, a magnetoresistive sensor, a Wiegand sensor, a SQUID sensor, a coaxial capacitor and an electromagnetic far-field sensor.

5. Device according to either of Claims 3 or 4, wherein the field strength limit value can be set.

6. Device according to one of Claims 3 to 5, wherein the device has a combination of at least two of the sensors mentioned.

7. Device according to one of Claims 3 to 6, wherein the device has at least one further sensor for detecting airbag triggering, in particular an acceleration sensor and/or an acoustic sensor, which is/are connected to the control device.

8. Device according to one of Claims 3 to 7, wherein the device can be retrofitted in a vehicle.

## Revendications

1. Procédé de déclenchement d'un appel d'urgence dans un véhicule équipé d'un coussin (2) d'air, dans lequel on envoie l'appel d'urgence en fonction d'un champ magnétique, électrique et/ou électromagnétique induit par l'amorçage d'un coussin (2) d'air, **caractérisé en ce que**, pour l'envoi de l'appel d'urgence, on mesure un champ magnétique, électrique et/ou électromagnétique induit par le courant passant dans le câble (4) de connexion d'un coussin d'air lors de son amorçage et, si une valeur limite de l'intensité du champ mesurée est dépassée, on déclenche l'envoi d'un appel d'urgence.

2. Procédé suivant la revendication 1, dans lequel on mesure le champ induit au moyen d'un capteur de Hall, d'une bobine (5) de Rogowski, d'un condensateur coaxial et/ou d'un détecteur électromagnétique de champ lointain.

3. Dispositif de déclenchement d'un appel (1) d'urgence dans un véhicule équipé d'un coussin (2) d'air, comportant un dispositif d'émission d'un appel (9) d'urgence, un dispositif de mesure d'un champ (5) magnétique, électrique et/ou électromagnétique induit par l'amorçage d'un coussin d'air ainsi qu'un dispositif de commande, le dispositif de commande étant relié en technique de commande au dispositif d'émission de l'appel (9) d'urgence et au dispositif de mesure du champ magnétique, électrique et/ou électromagnétique de manière à pouvoir envoyer, lorsqu'une intensité de champ dépassant une valeur limite mémorisée est mesurée, un signal de déclenchement d'un appel d'urgence par le dispositif de commande au dispositif d'émission d'un appel (9) d'urgence.

4. Dispositif suivant la revendication 3, dans lequel le dispositif de mesure du champ (5) magnétique, électrique et/ou électromagnétique a au moins un capteur choisi dans le groupe constitué d'une bobine de Rogowski, d'un capteur de Hall, d'une sonde de magnétorésistante, d'un capteur de Wiegand, d'un capteur SQUID, d'un condensateur coaxial et d'un capteur électromagnétique de champ lointain.

5. Dispositif suivant l'une des revendications 3 ou 4, dans lequel la valeur limite de l'intensité du champ est réglable.

6. Dispositif suivant l'une des revendications 3 à 5, dans lequel ce dispositif a une combinaison d'au moins deux des capteurs mentionnés.

7. Dispositif suivant l'une des revendications 3 à 6, dans lequel ce dispositif a au moins un autre capteur de détection d'un déclenchement d'un coussin d'air, notamment un capteur d'accélération et/ou un capteur acoustique, qui est relié au dispositif de commande.

8. Dispositif suivant l'une des revendications 3 à 7, dans lequel ce dispositif peut rééquiper un véhicule ultérieurement.
